# EUROPÄISCHE PATENTANMELDUNG

(11) **EP 1 705 268 A2**
(43) Veröffentlichungstag der Anmeldung: **27.09.2006**
(21) Anmeldenummer: 06005680.1
(22) Anmeldetag: 20.03.2006
(51) Int. Cl.: C25D 7/00, C25D 21/00, A61C 13/00

(54) **Beschichtungsvorrichtung für zahntechnische Produkte**

(30) Priorität: 23.03.2005 DE 202005004920 U
(71) Anmelder: BEGO Bremer Goldschlägerei Wilh. Herbst GmbH & Co. KG, 28359 Bremen (DE)
(72) Erfinder: Lambrecht, Heinz, 28201 Bremen (DE); Dierkes, Stephan, Dr., 28357 Bremen (DE); Stolzner, Wolfgang, 27777 Ganderkesee-Rethorn (DE); Tjarks, Sandra, 28211 Bremen (DE)
(74) Vertreter: Eisenführ, Speiser & Partner

(57) **Zusammenfassung**

Die Erfindung betrifft eine Vorrichtung zur Beschichtung zahntechnischer Produkte, umfassend eine erste Aufnahmevorrichtung, in der ein Beschichtungsbad angeordnet werden kann und eine zweite Aufnahmevorrichtung zur Aufnahme mindestens eines zahntechnischen Produkts, wobei erste und zweite Aufnahmevorrichtung relativ zueinander bewegbar sind, um ein an der zweiten Aufnahmevorrichtung aufgenommenes zahntechnisches Produkt mit einem in der ersten Aufnahmevorrichtung angeordneten Beschichtungsbad in Kontakt zu bringen.
Solche Vorrichtungen weisen den Nachteil auf, dass die Beschichtung in Abhängigkeit der Beschichtungsbadhöhe erfolgt und somit oftmals ungenau lokalisiert wird. Die Erfindung beseitigt diesen Nachteil mittels eines Abstandssensors zur Erfassung des Abstands zwischen dem Füllstandspiegel des Beschichtungsbads und einem in der zweiten Aufnahmevorrichtung aufgenommenen zahntechnischen Produkt.

## Beschreibung

Die Erfindung betrifft eine Vorrichtung zur Beschichtung zahntechnischer Produkte, umfassend
- eine erste Aufnahmevorrichtung, in der ein Beschichtungsbad angeordnet werden kann,
- eine zweite Aufnahmevorrichtung zur Aufnahme mindestens eines zahntechnischen Produkts
wobei erste und zweite Aufnahmevorrichtung relativ zueinander bewegbar sind, um ein an der zweiten Aufnahmevorrichtung aufgenommenes zahntechnisches Produkt mit einem in der ersten Aufnahmevorrichtung angeordneten Beschichtungsbad in Kontakt zu bringen. Ein weiterer Aspekt der Erfindung ist ein Beschichtungsverfahren, mit den Schritten: Anordnen eines Beschichtungsbads in einer ersten Aufnahmevorrichtung, Aufnehmen mindestens eines zahntechnischen Produkts in einer zweiten Aufnahmevorrichtung, wobei die erste und zweite Aufnahmevorrichtung relativ aufeinander zu bewegt werden, um das an der zweiten Aufnahmevorrichtung aufgenommene zahntechnische Produkt mit dem in der ersten Aufnahmevorrichtung angeordneten Beschichtungsbad in Kontakt zu bringen.

Vorrichtungen und Verfahren der vorgenannten Art sind bekannt und werden beispielsweise zur elektrophoretischen Abscheidung eines keramischen Schlickers oder zur galvanischen Abscheidung eines Metalls oder einer metallischen Legierung auf zahntechnischen Produkten wie Brücken oder Ähnlichem verwendet. Bei dieser Anwendung wird eine elektrische Spannung zwischen dem zu beschichtenden zahntechnischen Produkt und einer in das Beschichtungsbad eingetauchten Elektrode erzeugt, wodurch bei Eintauchen des zahntechnischen Produkts in das Beschichtungsbad elektrisch unterschiedlich zum Produkt geladene Teilchen auf dem zahntechnischen Produkt abgelagert werden und hierdurch eine Beschichtung darauf aufbauen.

Ein Problem solcher bekannter Beschichtungsvorrichtungen besteht darin, dass sich der Füllstandspiegel des Beschichtungsbads, also die Oberfläche, in die das zahntechnische Produkt zur Beschichtung eingetaucht wird, während eines Beschichtungsvorgangs absenken oder anheben kann und insbesondere die Höhe des Füllstandsspiegels im Verlauf mehrerer Beschichtungsvorgänge variieren kann. Es ist jedoch regelmäßig wünschenswert, die zahntechnischen Produkte bis zu einer bestimmten Grenze zu beschichten und jenseits von dieser Grenze eine Beschichtung zu vermeiden, um aufwendige Nacharbeiten zu vermeiden. Es besteht daher ein Bedarf für eine solche Beschichtungsvorrichtung, die eine zuverlässige Einhaltung einer solchen Beschichtungsgrenze ermöglicht, selbst dann, wenn sich die Höhe des Füllstandsspiegels im Verlauf einer Beschichtung oder im Verlauf mehrerer Beschichtungen ändert.

Ein weiteres Problem bekannter Beschichtungsvorrichtungen besteht darin, dass vor Beginn des Beschichtungsvorgangs aufwendige Vorbereitungen in einem Labor erfolgen müssen, um das Beschichtungsbad zu homogenisieren, z. B. um die Beschichtungspartikel im Beschichtungsbad in homogene Suspension zu bringen. Dies ist insbesondere dann zeitaufwendig und führt zu erhöhten Herstellungskosten, wenn eine Abscheidung auf das zahntechnische Produkt aus zwei oder mehr unterschiedlichen Beschichtungsbädern in zeitlicher Abfolge vorgenommen werden soll. Es besteht daher ein Bedarf für eine Beschichtungsvorrichtung, die den Wechsel eines Beschichtungsbades oder den Austausch zwischen zwei unterschiedlichen Beschichtungsbädern vereinfacht und die Zeitspanne, nach der ein solcher Wechsel vorgenommen werden kann bzw. die für einen solchen Wechsel erforderlichen Vorbereitungsmaßnahmen verringert.

Noch ein weiteres Problem bekannter Beschichtungsvorrichtungen liegt darin, dass die Befestigung der zahntechnischen Produkte an der Beschichtungsvorrichtung in aufwendiger Kleinarbeit erfolgen muss und daher ein schneller Wechsel der zahntechnischen Produkte nicht möglich ist. Es besteht ein Bedarf für eine Beschichtungsvorrichtung, die diesen Arbeitsablauf optimiert.

Schließlich liegt ein weiteres Problem bekannter Beschichtungsvorrichtungen darin, dass die elektrophoretische oder galvanische Abscheidung unter Regelung eines konstanten Stroms erfolgt. Dies ist jedoch für bestimmte Beschichtungsmaterialien und für bestimmte Geometrien zahntechnischer Produkte nachteilhaft und führt zu nichtzufriedenstellenden Beschichtungsergebnissen. Es besteht ein Bedarf für eine Beschichtungsvorrichtung, die auch für solche Fälle ein zufriedenstellendes Beschichtungsergebnis ermöglicht.

Die Erfindung löst die vorgenannten Probleme gemäß eines ersten Aspekts mit einer Beschichtungsvorrichtung der eingangs genannten Art, die mit einem Abstandssensor zur Erfassung des Abstands zwischen dem Füllstandspiegel des Beschichtungsbads und einem in der zweiten Aufnahmevorrichtung aufgenommenen zahntechnischen Produkt fortgebildet ist.

Durch die erfindungsgemäße Beschichtungsvorrichtung wird es ermöglicht, die relative Lage des zahntechnischen Produkts zu dem Füllstandspiegel des Beschichtungsbads zu bestimmen und hierdurch die Eintauchtiefe des zahntechnischen Produkts in das Beschichtungsbad sowohl während des Eintauchvorgangs genau einzustellen als auch während des Beschichtungsvorgangs erforderlichenfalls nachzuregeln. Der Abstandssensor kann zu diesem Zweck mit einer optischen Anzeige zur Signalisierung der richtigen Eintauchtiefe verbunden sein oder kann mit einer Bewegungsvorrichtung zur direkten, vorzugsweise automatischen, Einstellung der richtigen Eintauchtiefe verbunden sein. Die efindungsgemäße Vorrichtung erlaubt es, Beschichtungsbäder unterschiedlicher Abmessungen in der ersten Aufnahmevorrichtung anzuordnen und unabhängig von der Größe des Beschichtungsbads und der Höhe des Füllstandsspiegels einen Beschichtungsvorgang an einem Produkt vorzunehmen, der eine vorbestimmte Fläche bis zu einer vorbestimmten Grenze an einem Produkt beschichtet.

Gemäß einer ersten vorteilhaften Fortbildung ist der Abstandssensor ausgebildet, um den Abstand nach einem optischen, akustischen oder elektrischen Messprinzip zu erfassen. Grundsätzlich kann der Abstandssensor ausgebildet sein, um den Abstand mittels aller bekannter Messprinzipien zu erfassen. Es ist aber gemäß dieser Ausführungsform für eine exakte Erfassung des Abstand bevorzugt, wenn die relative Lage des zahntechnischen Produkts zu dem Füllstandsspiegel durch eine Messeinrichtung bestimmt wird, die die Entfernung mit einem optischem, akustischem oder elektrischem Messprinzip ermittelt. Die optische und akustische Abstandsmessung hat dabei den Vorteil, dass sie ein berührungsloses Messprinzip verwendet und somit weitestgehend unempfindlich gegenüber Verschmutzung ist. Zudem vermeidet die optische oder akustische Abstandserfassung die Handhabbarkeit behindernde Sensorbauteile im Beschichtungsbereich der erfindungsgemäßen Vorrichtung.

Die erfindungsgemäße Vorrichtung kann vorteilhaft weitergebildet werden, indem der Abstandssensor einen elektrischen Leiter umfasst, der mit der zweiten Aufnahmevorrichtung verbunden ist, und eine elektrische Auswertungseinheit, die ausgebildet ist, um eine elektrische Verbindung zwischen dem elektrischen Leiter und dem Beschichtungsbad zu erfassen. Bei dieser Fortbildung wird ein auf einem elektrischen Messprinzip basierender Abstandssensor verwendet, was in besonders einfacher Weise umsetzbar ist. Mit dieser Fortbildung wird zudem in besonders einfacher und zuverlässiger Weise die relative Lage zwischen einem zu beschichtenden Produkt und dem Spiegel des Beschichtungsbads erfasst. Diese Fortbildung macht sich zunutze, dass Beschichtungsbäder regelmäßig elektrisch leitfähig sind, wenn eine elektrophoretische oder galvanische Abscheidung stattfindet. Beschichtungsbäder für andere Arten der Beschichtung können regelmäßig mit geringem Aufwand elektrisch leitfähig gemacht werden, um diese Fortbildung der Erfindung zu nutzen.

Der elektrische Leiter der vorgenannten Ausführungsform wird vorzugsweise durch einen weitgehend starren Draht gebildet, der sich bis auf eine bestimmte Höhe, welche die Grenze zwischen dem zu beschichtenden Teil des Produkts und dem nicht zu beschichtenden Teil des Produkts darstellt, erstreckt. Auf diese Weise kann das zu beschichtende Produkt genau bis zu dieser Grenze in das Beschichtungsbad eingetaucht werden und bei Erreichen dieser Grenze wird der elektrische Kreis geschlossen, wodurch eine sichere Erfassung dieser Grenze ermöglicht wird.

Weiterhin ist es bei den vorgenannten Ausführungsformen mit elektrischer Auswertungseinheit vorteilhaft, wenn die elektrische Auswertungseinheit ausgebildet ist, um den elektrischen Widerstand des Beschichtungsbades zu erfassen. Auf diese Weise können für ein qualitativ hochwertiges Beschichtungsergebnis wichtige Parameter des Beschichtungsbades erfasst werden und eine Prozessteuerung anhand dieser Parameter vorgenommen werden.

Dabei ist es bevorzugt, wenn die elektrische Auswertungseinheit ausgebildet ist, um aus dem Widerstand des Beschichtungsbades den Anteil von Beschichtungsmaterial in dem Beschichtungsbad zu berechnen. Diese Fortbildung ermöglicht, dass eine höhere Beschichtungsqualität erreicht wird, indem der für eine solche Qualität erforderliche Anteil von Beschichtungsmaterial im Beschichtungsbad vor und/oder während des Beschichtungsvorgangs überprüft wird.

Es ist bevorzugt, dass der Abstandssensor zwei elektrische Leiter, die mit der zweiten Aufnahmevorrichtung verbunden sind und deren Abstand zum Füllstandsspiegel des Beschichtungsbads unterschiedlich ist, und eine elektrische Auswertungseinheit, die ausgebildet ist, um eine elektrische Verbindung zwischen den elektrischen Leitern und dem Beschichtungsbad zu erfassen, umfasst. Auf diese Weise wird ermöglicht, den Füllstandsspiegel relativ zum zu beschichtenden Produkt in einem bestimmten Bereich zu halten, indem durch die elektrische Auswertungseinheit eine relative Position der beiden elektrischen Leiter zum Füllstandsspiegel eingestellt wird, in welcher der erste Leiter in das Beschichtungsbad eingetaucht ist und der zweite Leiter in das Beschichtungsbad nicht eingetaucht ist. Der Vorteil dieser Ausführungsform besteht unter anderem darin, dass ein Ansteigen des Füllstandsspiegels detektiert werden kann, indem dann der zweite Leiter in Kontakt mit dem Beschichtungsbad kommt und dies insoweit für eine Korrektur benutzt werden kann, indem der Abstand so eingestellt wird, dass der zweite Leiter wieder außer Kontakt kommt.

Weiterhin ist es bevorzugt, dass der/die elektrische(n) Leiter biegesteif ist/sind und eine plastische Verformbarkeit aufweist/aufweisen, die eine Anpassung der Lage der zum Beschichtungsbad weisenden Enden der Leiter in Bezug auf ein an der zweiten Aufnahmevorrichtung aufgenommenes zahntechnisches Produkt erlaubt. Auf diese Weise kann der jeweilige elektrische Leiter auf einfache Weise auf eine gewünschte Beschichtungsgrenze adjustiert werden, indem das zum Beschichtungsbad weisende Ende so gebogen wird, dass es auf Höhe dieser gewünschten Beschichtungsgrenze liegt.

Weiterhin ist es bevorzugt, dass der Abstandssensor einen elektrischen Kontakt umfasst, der mit einer elektrischen Auswertungseinheit in Verbindung steht und der mit dem Beschichtungsbad in elektrische Verbindung gebracht werden kann. Dies ermöglicht einen einfachen Aufbau der Vorrichtung, einen schnellen Wechsel des Beschichtungsbads und eine zuverlässige Erfassung einer elektrischen Verbindung mit dem Beschichtungsbad. Der elektrische Kontakt kann insbesondere integral mit dem für eine elektrophoretische oder galvanische Abscheidung erforderlichen Elektrodenelement im Beschichtungsbad ausgebildet sein.

Gemäß eines zweiten Aspekts der vorliegenden Erfindung wird eine Vorrichtung der eingangs genannten Art fortgebildet, indem eine erste Rührvorrichtung zum Umrühren des Beschichtungsbades und eine zweite Rührvorrichtung zum Umrühren eines Reservebeschichtungsbades bereitgestellt wird. Auf diese Weise wird erreicht, dass der Wechsel zwischen einem Beschichtungsbad und einem Reservebeschichtungsbad ohne Zeitverluste und aufwendige Vorbereitungen in einem Labor erfolgen kann, indem das Reservebeschichtungsbad mittels der zweiten Rührvorrichtung in einem Zustand gehalten wird, der dessen sofortigen Einsatz ermöglicht. Diese erfindungsgemäße Maßnahme ist insbesondere dann vorteilhaft, wenn mehrere Beschichtungsvorgänge hintereinander ohne Zeitverlust durchgeführt werden sollen, um bei Verbrauch eines Beschichtungsbades einen schnellen Wechsel auf ein zweites, neues Beschichtungsbad zu ermöglichen. Weiterhin ist diese erfindungsgemäße Ausbildung vorteilhaft, wenn unterschiedliche Beschichtungen aus zwei unterschiedlichen Beschichtungsbädern in zeitlicher Abfolge durchgeführt werden sollen.

Gemäß eines dritten Aspekts der Erfindung wird eine eingangs genannte Vorrichtung dadurch fortgebildet, dass die erste Aufnahmevorrichtung eine Leiterplatte umfasst, die Mittel zur Befestigung eines zahntechnischen Produkts aufweist und die an der Beschichtungsvorrichtung mittels eines Steckverbinders, vorzugsweise eines elektrischen Direktsteckverbinders lösbar befestigbar ist. Diese Fortbildung ermöglicht eine besonders schnelle und kostengünstige Befestigung der zu beschichtenden Produkte an der erfindungsgemäßen Beschichtungsvorrichtung. Insbesondere ermöglicht diese Fortbildung, dass die zu beschichtenden Produkte zunächst auf einer von der Beschichtungsvorrichtung getrennten Leiterplatte befestigt werden und dann in einfacher und schneller Weise so mit der Beschichtungsvorrichtung verbunden werden, dass der Beschichtungsvorgang unmittelbar hierauf beginnen kann. Eine Leiterplatte eignet sich insbesondere gut für diesen Zweck, da sie ein kostengünstiges Massenbauteil darstellt, das mit kostengünstigen Fertigungsschritten für den gewünschten Zweck fortgebildet werden kann. Der Steckverbinder kann vorzugsweise als elektrischer Direktsteckverbinder, der an einer Seitenkante der Leiterplatte angeordnet ist, ausgebildet sein und umfasst vorzugsweise eine Mehrzahl von elektrischen Verbindungen, um beispielsweise mehrere zu beschichtende Produkte elektrisch mit der Beschichtungsvorrichtung verbinden zu können oder um beispielsweise der Beschichtungsvorrichtung durch ein elektrisches Signal zu signalisieren, ob eine Leiterplatte eingesteckt ist oder nicht.

Dabei ist es insbesondere bevorzugt, diese erfindungsgemäße Fortbildung mit einem Abstandssensor der zuvor beschriebenen Art zu kombinieren, insbesondere einem Abstandssensor mit einem elektrischen Leiter. Bei dieser Kombination kann der Abstandssensor, insbesondere der elektrische Leiter auf der Leiterplatte angeordnet werden und mittels des Steckverbinders elektrisch mit der Beschichtungsvorrichtung verbunden werden.

Eine Fortbildung dieses Aspekts der Erfindung besteht darin, dass die Mittel zur Befestigung eines zahntechnischen Produkts eine oder mehrere Schraubklemmen zur mechanischen und elektrischen Anbindung eines zahntechnischen Produkts umfassen. Solche Schraubklemmen ermöglichen in einfacher Weise eine schnelle und sichere mechanische und elektrisch leitende Befestigung eines zu beschichtenden Produkts an der Leiterplatte. Dabei können vorzugsweise mehrere solcher Schraubklemmen in beabstandeter Weise auf der Leiterplatte angeordnet werden, um auf diese Weise mehrere zu beschichtende Produkte gleichzeitig an der Leiterplatte zu befestigen.

Weiterhin ist es bei dieser Ausführungsform vorteilhaft, wenn die Schraubklemme(n) über einen oder mehrere Leiterpfade auf der Leiterplatte mit dem Steckverbinder elektrisch verbunden ist/sind. Auf diese Weise wird eine kostengünstige und robuste elektrische Anbindung der Schraubklemmen mit dem Steckverbinder erreicht.

Schließlich ist es bei den vorgenannten Ausführungsformen mit einer Leiterplatte vorteilhaft, wenn die Leiterplatte einen Platz zur Aufnahme einer Befestigungsmasse, vorzugsweise einer Knetmasse, zur Befestigung eines zahntechnischen Produkts aufweist. Dieser Platz zur Aufnahme der Befestigungsmasse kann insbesondere zwischen mehreren Schraubklemmen angeordnet sein, um sowohl die Befestigung zu beschichtender Produkte an den Schraubklemmen als auch die Befestigung zu beschichtender Produkte an der Befestigungsmasse zu erlauben. Die Befestigung mittels Befestigungsmasse weist regelmäßig den Vorteil auf, dass auch zu beschichtende Produkte mit einer Geometrie, die sich schlecht in Schraubklemmen, Federklemmen oder ähnlichen Standardverbindern befestigen lassen, an der Leiterplatte befestigt werden können. Die Befestigungsmasse kann dabei insbesondere in einem durch eine Ausnehmung in der Leiterplatte gebildeten Platz aufgenommen sein. Es ist weiterhin bevorzugt, wenn die Befestigungsmasse elektrisch leitend ist, um auf diese Weise eine einfache elektrische Anbindung der zu beschichtenden Produkte zu ermöglichen.

Gemäß eines vierten Aspekts der Erfindung wird eine Vorrichtung der eingangs genannten Art fortgebildet durch Vorschubmittel zur Bewegung der ersten Aufnahmevorrichtung. Diese Fortbildung hat den Vorteil, dass nicht die zweite Aufnahmevorrichtung bewegt werden muss, die regelmäßig eine Reihe von elektrischen Verbindungen aufweist und folglich aufwendige und bruchgefährdete flexible elektrische Verbindungen erfordern würde. Stattdessen ist die Bewegung der ersten Aufnahmevorrichtung mittels Vorschubmitteln besonders einfach, da auf dieser Seite regelmäßig nur eine elektrische Verbindung bereitzustellen ist. Hierdurch wird die Zuverlässigkeit der Beschichtungsvorrichtung erhöht und der Aufbau der Beschichtungsvorrichtung vereinfacht.

Dabei ist es insbesondere bevorzugt, wenn die Vorschubmittel einen Schrittmotor mit einer Schrittmotorsteuerung umfassen. Auf diese Weise wird eine präzise und reproduzierbare Positionierung der ersten Aufnahmevorrichtung ermöglicht.

Weiterhin ist es besonders vorteilhaft, wenn die Schrittmotorsteuerung ausgebildet ist, um den Schrittmotor mit einer ersten schnellen Geschwindigkeit zur raschen Annäherung von zahntechnischem Produkt und Beschichtungsbad und mit einer zweiten langsameren Geschwindigkeit zum präzisen Eintauchen des zahntechnischen Produkts in das Beschichtungsbad zu betreiben. Mit dieser Fortbildung wird ein schneller und gleichzeitig präziser Beschichtungsvorgang erreicht, indem die Grobannäherung zwischen zahntechnischem Produkt und Beschichtungsbad in einer vergleichsweise hohen Geschwindigkeit erfolgt und der für eine präzise Bestimmung der Beschichtungsgrenze wichtige Eintauchvorgang bei einer langsameren Geschwindigkeit erfolgt.

Schließlich wird gemäß eines fünften Aspekts der vorliegenden Erfindung eine Vorrichtung der eingangs genannten Art fortgebildet durch eine Regelungsvorrichtung zur Regelung eines elektrophoretischen oder galvanischen Abscheidungsvorgangs aus dem Beschichtungsbad auf das zahntechnische Produkt, wobei die Regelungsvorrichtung ausgebildet ist, um wahlweise eine Abscheidung bei konstanten Strom oder eine Abscheidung bei konstanter Spannung zu regeln. Diese Fortbildung ermöglicht es, dass in Abhängigkeit von Beschichtungsmaterial und Material und Geometrie des zu beschichtenden Produkts eine Konstantstromregelung oder eine Konstantspannungsregelung erfolgt.

Dabei ist es insbesondere vorteilhaft, wenn die Regelungsvorrichtung ausgebildet ist, um während des Beschichtungsvorgangs zwischen einer Abscheidung bei konstanten Strom und einer Abscheidung bei konstanter Spannung zu wechseln. Auf diese Weise kann auch im Verlauf des Beschichtungsvorgangs ein Wechsel der Regelungsweise erfolgen, um hierdurch auf Veränderungen des Beschichtungsbades oder der Oberflächeneigenschaften des zu beschichtenden Produkts zu reagieren.

Die erfindungsgemäße Vorrichtung arbeitet vorzugsweise nach einem Beschichtungsverfahren der eingangs genannten Art bei dem der Abstand zwischen dem Füllstandspiegel des Beschichtungsbads und dem in der zweiten Aufnahmevorrichtung aufgenommenen zahntechnischen Produkt mit einem Abstandssensor erfasst wird.

Dabei kann der Abstand vorzugsweise mittels eines optischen, akustischen oder elektrischen Messprinzips erfasst werden.

Weiterhin kann der Abstand vorzugsweise mittels eines elektrischen Leiters erfasst werden, der mit der zweiten Aufnahmevorrichtung verbunden ist, indem mittels einer elektrischen Auswertungseinheit eine elektrische Verbindung zwischen dem elektrischen Leiter und dem Beschichtungsbad erfasst wird.

Weiterhin ist bevorzugt, wenn der elektrische Leiter vor dem Beschichtungsvorgang so gebogen wird, dass sein zum Beschichtungsbad weisendes Ende in einer Ebene mit der gewünschten Beschichtungsgrenze des zahntechnischen Produkt liegt.

Die erfindungsgemäße Vorrichtung arbeitet weiterhin vorzugsweise nach einem eingangs oder zuvor beschriebenen Verfahren bei dem das Beschichtungsbades mittels einer ersten Rührvorrichtung unmittelbar vor dem Beschichtungsvorgang umgerührt wird und ein Reservebeschichtungsbad mittels einer zweiten Rührvorrichtung umgerührt wird.

Weiterhin arbeitet die erfindungsgemäße Vorrichtung vorzugsweise nach einem eingangs oder zuvor beschriebenen Verfahren, bei dem das zahntechnische Produkt an einer Leiterplatte befestigt wird, die an der Beschichtungsvorrichtung mittels eines Steckverbinders, vorzugsweise eines elektrischen Direktsteckverbinders lösbar befestigt wird.

Schließlich arbeitet die erfindungsgemäße Vorrichtung vorzugsweise nach einem eingangs oder zuvor beschriebenen Verfahren bei dem während des Beschichtungsvorgangs eine Regelungsvorrichtung zur Regelung eines elektrophoretischen oder galvanischen Abscheidungsvorgangs aus dem Beschichtungsbad auf das zahntechnische Produkt zwischen einer Abscheidung bei konstanten Strom und einer Abscheidung bei konstanter Spannung wechselt.

Zu den weiteren Ausführungsweisen, Vorteilen und Wirkungen der zuvor beschriebenen Arbeitsverfahren wird auf die korrespondierende Beschreibung der entsprechenden Ausführungsformen der erfindungsgemäßen Vorrichtung verwiesen.

Bevorzugte Ausführungsformen der Erfindung werden anhand der Figuren beschrieben. Es zeigen:
Figur 1 eine perspektivische Explosionsdarstellung einer erfindungsgemäßen Beschichtungsvorrichtung von schräg oben, und
Figur 2 eine perspektivische Explosionsdarstellung einer Aufnahmevorrichtung der Beschichtungsvorrichtung gemäß Figur 1 in einer Ansicht von schräg unten.

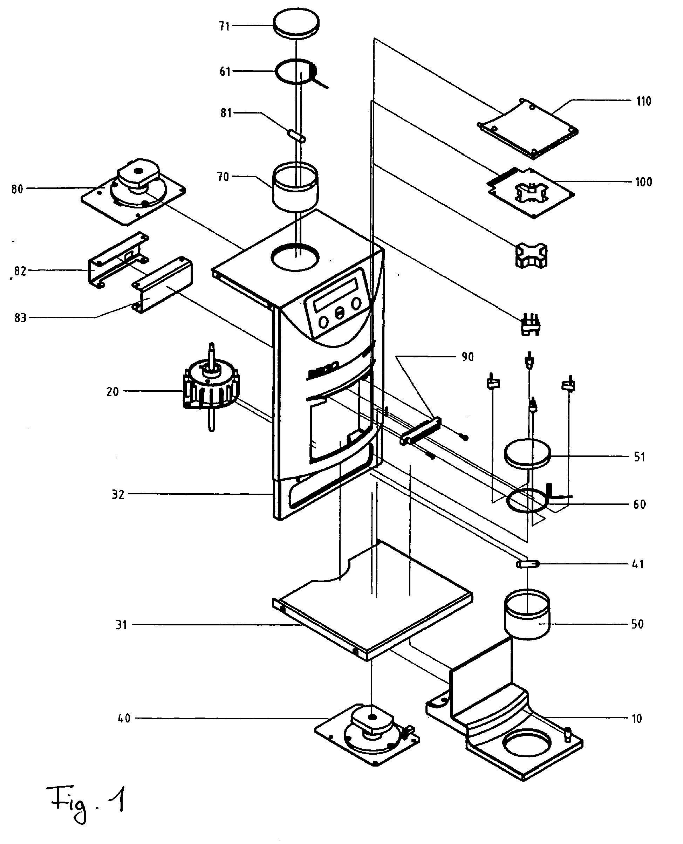

Bezugnehmend auf Figur 1 umfasst die erfindungsgemäße Beschichtungsvorrichtung einen Hubschlitten 10, der mittels eines digitalen Linearantriebs 20 vertikal verfahren werden kann.

Der Hubschlitten 10 ist oberhalb eines Gehäuseabdeckblechs 31 angeordnet, das Bestandteil des Gehäuses 30 der Beschichtungsvorrichtung ist. Unterhalb des Gehäuseabdeckblechs 31 ist ein erster Magnetrührer 40 angeordnet, der mit einem Schlickerbehälter 50, der auf dem Hubschlitten 10 angeordnet ist, zusammen wirkt wenn der Hubschlitten in einer abgesenkten Position oberhalb des Gehäuseabdeckblechs 31 positioniert ist. Zu diesem Zweck wird ein Magnetstäbchen 41 in den Schlickerbehälter 50 eingetaucht und durch die Rotation des Magnetrührers 40 in Bewegung versetzt.

Eine Ringelektrode 60 kann in den mit einem Deckel 51 verschließbaren Schlickerbehälter 50 eingesetzt werden, um eine Elektrode für den elektrophoretischen Abscheidungsvorgang darzustellen.

Ein zweiter Schlickerbehälter 70 mit Ringelektrode 52, Deckel 71 und Magnetstäbchen 81 ist in einer Ausnehmung 33 in einer oberen Gehäusewand 32 angeordnet und kann mittels eines zweiten Magnetrührers 80 umgerührt werden. Der Magnetrührer 80 ist mittels Befestigungselementen 82, 83 an der oberen Gehäusewand 32 befestigt.

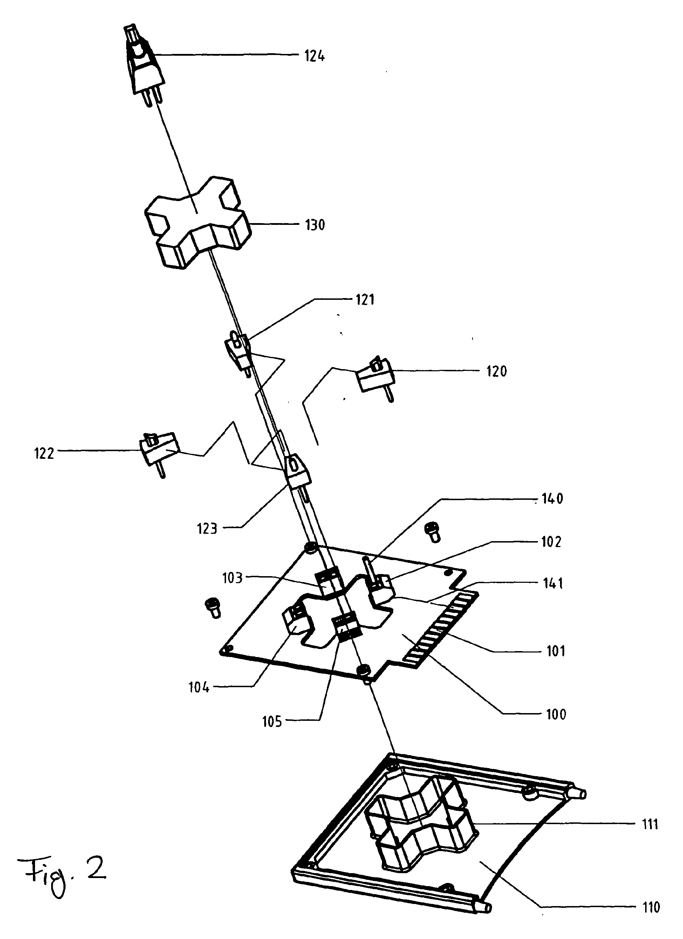

Bezugnehmend auf die Figuren 1 und 2 umfasst die erfindungsgemäße Beschichtungsvorrichtung weiterhin eine Objektsteckplatine 100, die mit einer Abdeckplatte 110 verbunden ist. Die Objektsteckplatine 100 umfasst einen standardisierten Platinendirektsteckverbinder 101 an einer Kante und kann mittels dieses Direktsteckverbinders mit einem korrespondierenden Steckverbinder 90 elektrisch und mechanisch gekoppelt werden, der am Gehäuse der Beschichtungsvorrichtung befestigt ist.

Die Objektsteckplatine 100 weist vier an den Eckpunkten eines Quadrats angeordnete Schraubklemmen 102-105 auf, in welche zahntechnische Produkte, wie in den Figuren beispielhaft dargestellte Einzelstumpfsegmente 120-123 elektrisch und mechanisch verbunden eingesteckt werden können.

Zwischen den Schraubklemmen 102-105 ist eine Ausnehmung 106 in der Objektsteckplatine angeordnet, die es ermöglicht, dass eine auf der Abdeckplatte 110 ausgebildete Umrahmung 111 durch die Objektsteckplatine hindurchragt. In der Umrahmung 11 kann eine Knetmasse 130 angeordnet werden, die, wie beispielhaft dargestellt, die mechanische Befestigung eines Brückenstumpfsegmentes 124 an der Objektsteckplatine in einfacher Weise erlaubt.

Weiterhin weist die Objektsteckplatine 100 einen elektrisch leitfähigen, biegesteifen und verformbaren Draht 140 auf, der mittels eines Leiterpfades 141 mit einem der Kontakte des Direktsteckverbinders 101 verbunden ist. Der Draht 140 erstreckt sich etwa senkrecht von der Objektsteckplatine weg und weist in die Richtung, in der die zu beschichtenden Produkte auf der Objektsteckplatine befestigt sind.

Ein Beschichtungsvorgang mit der erfindungsgemäßen Beschichtungsvorrichtung beginnt typischerweise damit, dass ein Schlickerbad im Schlickerbehälter 50 angesetzt wird oder ein fertiges Schlickerbad in dem Behälter 50 oder dem Behälter 70 auf den Hubschlitten 10 gesetzt wird und mittels des Magnetrührers 40 homogenisiert wird. Währenddessen können die zu beschichtenden zahntechnischen Produkte an den Schraubklemmen 102-105 und/oder in der Knetmasse 130 fixiert werden und hierauf folgend die Objektsteckplatine mit den daran befestigten zu beschichtenden Produkten mittels des Direktsteckverbinders 101 in den korrespondierenden Steckverbinder 90 eingesteckt werden, wodurch die zu beschichtenden Produkte mechanisch und elektrisch mit der Beschichtungsvorrichtung verbunden sind. Hierauf folgend wird der Hubschlitten 10 mittels des Linearantriebs 20 in schneller Verfahrung angehoben und nach einem vorbestimmten Verfahrweg auf einen langsamen Vorschub umgeschaltet. Dieser langsame Vorschub wird gestoppt, sobald der Draht 140 mit der Oberfläche des Schlickerbads im Behälter 50 in Kontakt kommt und hierdurch ein elektrischer Stromkreis zwischen dem elektrischen Draht 140 und der Ringelektrode 60 geschlossen wird.

Die Grenze zwischen dem zu beschichtenden Bereich und dem nicht zu beschichtenden Bereich wird eingestellt, indem der Draht 140 so verbogen wird, dass das in Richtung des Schlickerbades weisende Ende des Drahtes 140 in einer parallelen Ebene zur Objektsteckplatine liegt, die durch diese Beschichtungsgrenze aufgespannt wird.

## Patentansprüche

1. Vorrichtung zur Beschichtung zahntechnischer Produkte, umfassend
- eine erste Aufnahmevorrichtung (10), in der ein Beschichtungsbad (50) angeordnet werden kann,
- eine zweite Aufnahmevorrichtung (100, 110, 130) zur Aufnahme mindestens eines zahntechnischen Produkts (120-124)
wobei erste und zweite Aufnahmevorrichtung relativ zueinander bewegbar sind, um ein an der zweiten Aufnahmevorrichtung aufgenommenes zahntechnisches Produkt mit einem in der ersten Aufnahmevorrichtung angeordneten Beschichtungsbad in Kontakt zu bringen,
**gekennzeichnet durch** einen Abstandssensor (140) zur Erfassung des Abstands zwischen dem Füllstandspiegel des Beschichtungsbads und einem in der zweiten Aufnahmevorrichtung aufgenommenen zahntechnischen Produkt.

2. Vorrichtung nach Anspruch 1,
**dadurch gekennzeichnet, dass** der Abstandssensor ausgebildet ist, um den Abstand nach einem optischen, akustischen oder elektrischen Messprinzip zu erfassen.

3. Vorrichtung nach Anspruch 1 oder 2,
**dadurch gekennzeichnet, dass** der Abstandssensor einen elektrischen Leiter umfasst, der mit der zweiten Aufnahmevorrichtung verbunden ist, und eine elektrische Auswertungseinheit, die ausgebildet ist, um eine elektrische Verbindung zwischen dem elektrischen Leiter und dem Beschichtungsbad zu erfassen.

4. Vorrichtung nach Anspruch 3,
**dadurch gekennzeichnet, dass** der elektrische Leiter durch einen weitgehend starren Draht gebildet wird, der sich bis auf eine bestimmte Höhe, welche die Grenze zwischen dem zu beschichtenden Teil des Produkts und dem nicht zu beschichtenden Teil des Produkts darstellt, erstreckt.

5. Vorrichtung nach Anspruch 3 oder 4,
**dadurch gekennzeichnet, dass** die elektrische Auswertungseinheit ausgebildet ist, um den elektrischen Widerstand des Beschichtungsbades zu erfassen.

6. Vorrichtung nach Anspruch 5,
**dadurch gekennzeichnet, dass** die elektrische Auswertungseinheit ausgebildet ist, um aus dem Widerstand des Beschichtungsbades den Anteil von Beschichtungsmaterial in dem Beschichtungsbad zu berechnen.

7. Vorrichtung nach einem der vorhergehenden Ansprüche,
**dadurch gekennzeichnet, dass** der Abstandssensor zwei elektrische Leiter umfasst, die mit der zweiten Aufnahmevorrichtung verbunden sind und deren Abstand zum Füllstandsspiegel des Beschichtungsbads unterschiedlich ist, und eine elektrische Auswertungseinheit, die ausgebildet ist, um eine elektrische Verbindung zwischen den elektrischen Leitern und dem Beschichtungsbad zu erfassen.

8. Vorrichtung nach einem der vorhergehenden Ansprüche 3 bis 7,
**dadurch gekennzeichnet, dass** der/die elektrische(n) Leiter biegesteif ist/sind und eine plastische Verformbarkeit aufweist/aufweisen, die eine Anpassung der Lage der zum Beschichtungsbad weisenden Enden der Leiter in Bezug auf ein an der zweiten Aufnahmevorrichtung aufgenommenes zahntechnisches Produkt erlaubt.

9. Vorrichtung nach einem der vorhergehenden Ansprüche,
**dadurch gekennzeichnet, dass** der Abstandssensor einen elektrischen Kontakt (60) umfasst, der mit einer elektrischen Auswertungseinheit in Verbindung steht und der mit dem Beschichtungsbad in elektrische Verbindung gebracht werden kann.

10. Vorrichtung nach einem der vorhergehenden Ansprüche oder dem Oberbegriff von Anspruch 1,
**gekennzeichnet durch** eine erste Rührvorrichtung (40, 41) zum Umrühren des Beschichtungsbades und eine zweite Rührvorrichtung (80, 81) zum Umrühren eines Reservebeschichtungsbades.

11. Vorrichtung nach einem der vorhergehenden Ansprüche oder dem Oberbegriff von Anspruch 1,
**dadurch gekennzeichnet, dass** die erste Aufnahmevorrichtung eine Leiterplatte (100) umfasst, die Mittel (102-105, 130) zur Befestigung eines zahntechnischen Produkts aufweist und die an der Beschichtungsvorrichtung mittels eines Steckverbinders, vorzugsweise eines elektrischen Direktsteckverbinders (101) lösbar befestigbar ist.

12. Vorrichtung nach Anspruch 11,
**dadurch gekennzeichnet, dass** die Mittel zur Befestigung eines zahntechnischen Produkts eine oder mehrere Schraubklemmen (102-105) zur mechanischen und elektrischen Anbindung eines zahntechnischen Produkts umfassen.

13. Vorrichtung nach Anspruch 12,
**dadurch gekennzeichnet, dass** die Schraubklemme(n) über einen oder mehrere Leiterpfade auf der Leiterplatte mit dem Steckverbinder elektrisch verbunden ist/sind.

14. Vorrichtung nach einem der vorhergehenden Ansprüche 11-13,
**dadurch gekennzeichnet, dass** die Leiterplatte einen Platz (111) zur Aufnahme einer Befestigungsmasse (130), vorzugsweise einer Knetmasse, zur Befestigung eines zahntechnischen Produkts aufweist.

15. Vorrichtung nach einem der vorhergehenden Ansprüche oder dem Oberbegriff von Anspruch 1,
**gekennzeichnet durch** Vorschubmittel (20) zur Bewegung der ersten Aufnahmevorrichtung.

16. Vorrichtung nach Anspruch 15,
**dadurch gekennzeichnet, dass** die Vorschubmittel einen Schrittmotor mit einer Schrittmotorsteuerung umfassen.

17. Vorrichtung nach Anspruch 16,
**dadurch gekennzeichnet, dass** die Schrittmotorsteuerung ausgebildet ist, um den Schrittmotor mit einer ersten schnellen Geschwindigkeit zur raschen Annäherung von zahntechnischem Produkt und Beschichtungsbad und mit einer zweiten langsameren Geschwindigkeit zum präzisen Eintauchen des zahntechnischen Produkts in das Beschichtungsbad zu betreiben.

18. Vorrichtung nach einem der vorhergehenden Ansprüche oder dem Oberbegriff von Anspruch 1,
**gekennzeichnet durch** eine Regelungsvorrichtung zur Regelung eines elektrophoretischen oder galvanischen Abscheidungsvorgangs aus dem Beschichtungsbad auf das zahntechnische Produkt, wobei die Regelungsvorrichtung ausgebildet ist, um wahlweise eine Abscheidung bei konstanten Strom oder eine Abscheidung bei konstanter Spannung zu regeln.

19. Vorrichtung nach Anspruch 18,
**dadurch gekennzeichnet, dass** die Regelungsvorrichtung ausgebildet ist, um während des Beschichtungsvorgangs zwischen einer Abscheidung bei konstanten Strom und einer Abscheidung bei konstanter Spannung zu wechseln.

20. Beschichtungsverfahren, mit den Schritten:
- Anordnen eines Beschichtungsbads (50) in einer ersten Aufnahmevorrichtung (10),
- Aufnehmen mindestens eines zahntechnischen Produkts (120-124) in einer zweiten Aufnahmevorrichtung (100, 110, 130),
wobei die erste und zweite Aufnahmevorrichtung relativ aufeinander zu bewegt werden, um das an der zweiten Aufnahmevorrichtung aufgenommene zahntechnische Produkt mit dem in der ersten Aufnahmevorrichtung angeordneten Beschichtungsbad in Kontakt zu bringen,
**dadurch gekennzeichnet, dass** der Abstand zwischen dem Füllstandspiegel des Beschichtungsbads und dem in der zweiten Aufnahmevorrichtung aufgenommenen zahntechnischen Produkt mit einem Abstandssensor (140) erfasst wird.

21. Verfahren nach Anspruch 20,
**dadurch gekennzeichnet, dass** der Abstand mittels eines optischen, akustischen oder elektrischen Messprinzips erfasst wird.

22. Verfahren nach Anspruch 20 oder 21,
**dadurch gekennzeichnet, dass** der Abstand mittels eines elektrischen Leiters erfasst wird, der mit der zweiten Aufnahmevorrichtung verbunden ist, indem mittels einer elektrischen Auswertungseinheit eine elektrische Verbindung zwischen dem elektrischen Leiter und dem Beschichtungsbad erfasst wird.

23. Verfahren nach Anspruch 22,
**dadurch gekennzeichnet, dass** der elektrische Leiter vor dem Beschichtungsvorgang so gebogen wird, dass sein zum Beschichtungsbad weisendes Ende In einer Ebene mit der gewünschten Beschichtungsgrenze des zahntechnischen Produkt liegt.

24. Verfahren nach einem der vorhergehenden Ansprüche 20-23 oder dem Oberbegriff von Anspruch 19,
**dadurch gekennzeichnet, dass** das Beschichtungsbades mittels einer ersten Rührvorrichtung (40, 41) unmittelbar vor dem Beschichtungsvorgang umgerührt wird und ein Reservebeschichtungsbad mittels einer zweiten Rührvorrichtung umgerührt wird.

25. Verfahren nach einem der vorhergehenden Ansprüche 20-24 oder dem Oberbegriff von Anspruch 19,
**dadurch gekennzeichnet, dass** das zahntechnische Produkt an einer Leiterplatte (100) befestigt wird, die an der Beschichtungsvorrichtung mittels eines Steckverbinders, vorzugsweise eines elektrischen Direktsteckverbinders (101) lösbar befestigt wird.

26. Verfahren nach einem der vorhergehenden Ansprüche 20-25 oder dem Oberbegriff von Anspruch 19,
**dadurch gekennzeichnet, dass** während des Beschichtungsvorgangs eine Regelungsvorrichtung zur Regelung eines elektrophoretischen oder galvanischen Abscheidungsvorgangs aus dem Beschichtungsbad auf das zahntechnische Produkt, zwischen einer Abscheidung bei konstanten Strom und einer Abscheidung bei konstanter Spannung wechselt.
